# EUROPEAN PATENT APPLICATION

(11) **EP 4 542 524 A1**
(43) Date of publication of application: **23.04.2025**
(21) Application number: 23829370.8
(22) Date of filing: 19.01.2023
(51) Int. Cl.: G08G 1/0967

(54) **VISUAL FIELD ENHANCEMENT METHOD, ELECTRONIC DEVICE AND STORAGE MEDIUM**

(30) Priority: 29.06.2022 CN 202210747525
(71) Applicant: ZTE Corporation, Shenzhen, Guangdong 518057 (CN)
(72) Inventor: XU, Zeming, Shenzhen, Guangdong 518057 (CN)
(74) Representative: Ziebig Hengelhaupt Intellectual Property Attorneys Patentanwaltskanzlei PartGmbB
(86) International application number: PCT/CN2023/073242
(87) International publication number: WO 2024/001177

(57) **Abstract**

A visual field enhancement method, an electronic device and a storage medium. The visual field enhancement method which is applied to a main device comprises: acquiring displacement information of a main device (S101); sending the displacement information to a target device, so that the target device obtains environmental information of a surrounding area of the main device based on the displacement information (S102); and receiving the environmental information, which is sent from the target device, acquiring the current initial visual-field image of the main device, and performing display adjustment on the initial visual-field image based on the environmental information, so as to obtain a visual field enhancement image, which has been subjected to display adjustment (S103).

## Description

### CROSS REFERENCE TO RELATED APPLICATIONS

The present disclosure claims priority to Chinese patent application No. 202210747525.6 filed on June 29, 2022, the entire contents of which are incorporated herein by reference.

### TECHNICAL FIELD

The present disclosure relates to the field of display technologies, and in particular to a visual field enhancement method, an electronic device, and a storage medium.

### BACKGROUND

A range of human visual perception, auditory perception or the like is limited, and people often encounter dangers due to an insufficient perception range.

In related technologies, to avoid dangers caused by the insufficient perception range, early warning methods for collision avoidance mainly involve expanding an angle of a visual field or using radar sensing. However, these technical means all have flaws. In practical applications, there may be problems such as a blind spot in the visual field and an unclear coordinate of a target object within a radar sensing range, leading to a low user perception range or perception ability. This may easily result in accidents such as collisions or operational errors.

### SUMMARY

Some embodiments of the present disclosure provide a visual field enhancement method, an electronic device, and a storage medium.

In a first aspect, some embodiments of the present disclosure provide a visual field enhancement method, applied to a main device, and including: obtaining displacement information of the main device; sending the displacement information to a target device, for enabling the target device to obtain environmental information of a surrounding area of the main device based on the displacement information; receiving the environmental information sent from the target device, obtaining a current initial visual-field image of the main device, and performing display adjustment on the initial visual-field image based on the environmental information, to obtain a visual-field enhanced image after the display adjustment.

In a second aspect, some embodiments of the present disclosure provide a visual field enhancement method, applied to a target device, and including: receiving displacement information sent from a main device; obtaining environmental information of a surrounding area of the main device based on the displacement information; sending the environmental information to the main device, for enabling the main device to perform display adjustment on a current initial visual-field image of the main device based on the environmental information, to obtain a visual-field enhanced image after the display adjustment.

In a third aspect, some embodiments of the present disclosure provide a visual field enhancement method, applied to a main device, and including: obtaining displacement information of the main device and a current initial visual-field image of the main device; sending the displacement information and the initial visual-field image to a target device, for enabling the target device to obtain environmental information of a surrounding area of the main device based on the displacement information, and enabling the target device to perform display adjustment on the initial visual-field image based on the environmental information, to obtain a visual-field enhanced image after the display adjustment; receiving the visual-field enhanced image sent from the target device.

In a fourth aspect, some embodiments of the present disclosure provide a visual field enhancement method, applied to a target device, and including: receiving displacement information and an initial visual-field image sent from a main device; obtaining environmental information of a surrounding area of the main device based on the displacement information; performing display adjustment on the initial visual-field image based on the environmental information, to obtain a visual-field enhanced image after the display adjustment; sending the visual-field enhanced image to the main device.

In a fifth aspect, some embodiments of the present disclosure provide an electronic device including a memory and a processor. The memory is configured to store a computer program. The processor is configured to execute the computer program to implement the visual field enhancement method according to any one of the embodiments of the present disclosure in the first aspect, the second aspect, the third aspect, and the fourth aspect.

In a sixth aspect, some embodiments of the present disclosure provide a computer-readable storage medium, configured to store a program. The program is executed by a processor to implement the visual field enhancement method according to any one of the embodiments of the present disclosure in the first aspect, the second aspect, the third aspect, and the fourth aspect.

### BRIEF DESCRIPTION OF THE DRAWINGS

FIG. 1 is a schematic flow chart of a visual field enhancement method according to some embodiments of the present disclosure.
FIG. 2 is a schematic application scenario diagram according to some embodiments of the present disclosure.
FIG. 3 is a schematic application scenario diagram of a visual field enhancement method through a roadside device and a cloud control center according to some embodiments of the present disclosure.
FIG. 4 is a schematic application scenario diagram of a visual field enhancement method through a cloud control center according to some embodiments of the present disclosure.
FIG. 5 is a schematic flow chart of a visual field enhancement method according to some embodiments of the present disclosure.
FIG. 6 is a schematic flow chart of a visual field enhancement method according to some embodiments of the present disclosure.
FIG. 7 is a schematic flow chart of a visual field enhancement method according to some embodiments of the present disclosure.
FIG. 8 is a schematic diagram of a visual-field enhanced image according to some embodiments of the present disclosure.
FIG. 9 is a schematic flow chart of a visual field enhancement method according to some embodiments of the present disclosure.
FIG. 10 is a schematic diagram of a visual-field enhanced image according to some embodiments of the present disclosure.
FIG. 11 is a schematic flow chart of a visual field enhancement method according to some embodiments of the present disclosure.
FIG. 12 is a schematic flow chart of a visual field enhancement method according to some embodiments of the present disclosure.
FIG. 13 is a schematic flow chart of a visual field enhancement method according to some embodiments of the present disclosure.
FIG. 14 is a schematic flow chart of a visual field enhancement method according to some embodiments of the present disclosure.
FIG. 15 is a schematic flow chart of a visual field enhancement method according to some embodiments of the present disclosure.
FIG. 16 is a schematic flow chart of a visual field enhancement method according to some embodiments of the present disclosure.
FIG. 17 is a schematic flow chart of a visual field enhancement method according to some embodiments of the present disclosure.
FIG. 18 is a schematic structural view of a main device control system and a target device control system according to some embodiments of the present disclosure.
FIG. 19 is a schematic structural view of an electronic device according to some embodiments of the present disclosure.

### DETAILED DESCRIPTION

In order to make purposes, technical solutions, and effects of the present disclosure clearer and more comprehensible, the present disclosure will be further described in detail below with reference to accompanying drawings and embodiments. It should be understood that the embodiments described here are only used for explaining the present disclosure, but not to limit the present disclosure.

In the description of the present disclosure, it is necessary to understand that when it comes to orientation descriptions, orientations or position relationships, indicated by the terms "up", "down", "front", "back", "left", "right", etc., are based on orientations or position relationships shown in the accompanying drawings. The terms are only for purposes of facilitating the description of the present disclosure and simplifying the description, and do not indicate or imply that a device or element referred to must have a specific orientation, or be constructed and operated in a specific orientation. Therefore, the terms should not be understood as limiting the embodiments of the present disclosure.

It should be understood that in the description of the embodiments of the present disclosure, the term "some" means one or more, the term "plurality" (or "multiple") means two or more, the terms "greater than", "less than", "more than", etc. are understood to exclude the number, the terms "above", "below", "within", etc. shall be understood as including the number. If there are descriptions such as "first", "second", etc., they are only used for the purpose of distinguishing technical features and cannot be understood as indicating or implying a relative importance, implicitly indicating a number of technical features indicated, or implicitly indicating a sequence relationship among technical features indicated.

In the description of the embodiments of the present disclosure, unless otherwise explicitly limited, words such as "arranged", "mounted", and "connected" should be understood in a broad sense. Those skilled in the art can reasonably determine specific meanings of the above words in the embodiments of the present disclosure based on specific contents of the technical solutions.

In the embodiments of the present disclosure, taking high-bandwidth and low-latency characteristics of communication electronic technology of 5G and the next generation, as well as network technologies such as distributed point-to-point transmission or the like as network foundations, and taking near-eye display devices, headphones, sound pickup devices, etc. as technical foundations, a new concept of "auxiliary system" is proposed, which may improve a real-time vision of a special worker or an ordinary user, and help improve safety and work efficiency during driving and dangerous operations.

A range of human visual perception, auditory perception or the like is limited, and people often encounter dangers due to insufficient perception ranges. In the past, there was no way to solve the problems. People could only rely on methods such as training perception, reaction speed, etc., or use other tools, rules, and regulations to solve part of the problems. These solutions are usually limited and cannot fundamentally solve the problems. Moreover, when a user wears an equipment such as a helmet and etc., a visual field and a perception range of the user are further limited.

At present, common early warning methods for collision avoidance are basically expanding an angle of a visual field or using radar sensing. However, these technical means all have shortcomings. For example, although the method of expanding the angle of the visual field may obtain a larger visual field, there will still be a blind spot in the visual field. Although radar perception may solve some of the unclear perception problems caused by the blind spot in the visual field, radar perception sometimes causes unclear coordinates, reducing the user experience and unable to effectively enlarge the perception range of the user, which is not conducive to helping the user avoid collisions.

Based on this, the embodiments of the present disclosure provide a visual field enhancement method, an electronic device, and a storage medium. By enabling the user to view display content that enhances current visual perception, it is possible to present a modified version of user's environment within the user's visual field, replacing the user's original visual content. The method may be applied to fields such as security, holographic display, traffic safety, industrial safety, perceptual psychology, etc., and is suitable for various daily scenarios that require observation and processing of surrounding environment, such as traffic driving, industrial operations, construction engineering operations, etc.

### Detailed explanations are as following.

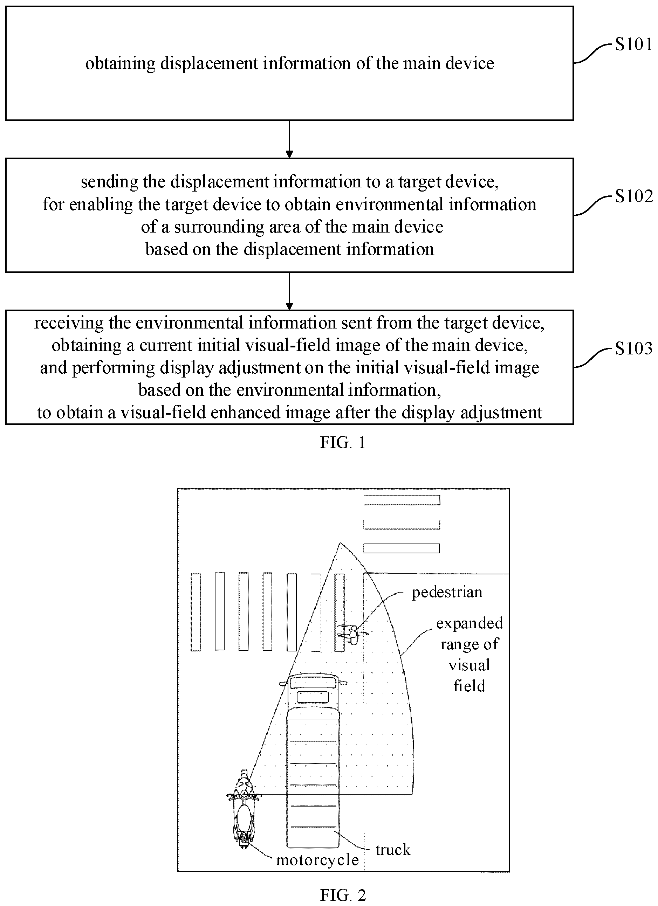

The embodiments of the present disclosure provide a visual field enhancement method, which is applied to a main device. As shown in FIG. 1, the visual field enhancement method in the embodiments of the present disclosure includes but is not limited to operations at block S101 to block S103.

At block S101, displacement information of the main device is obtained.

At block S102, the displacement information is sent to a target device, for enabling the target device to obtain environmental information of a surrounding area of the main device based on the displacement information.

At block S103, the environmental information sent from the target device is received, a current initial visual-field image of the main device is obtained, and display adjustment is performed on the initial visual-field image based on the environmental information, to obtain a visual-field enhanced image after the display adjustment.

In some embodiments, the visual field enhancement method may be applied to the main device. The main device may be any terminal device such as a vehicle, motorcycle, augmented reality (AR) helmet, AR glasses, virtual reality (VR) glasses, mobile phone, helmet with a display filter, etc. Alternatively, the main device may be any vehicle-mounted device with a display filter, or may be any terminal interface, and there is not limited here. During a process of executing the visual field enhancement method, the displacement information of the main device is obtained. The displacement information of the main device may represent a location and movement situation of the main device. The main device sends the obtained displacement information to the target device. After receiving the displacement information, the target device processes the displacement information to determine the surrounding area where the main device is located, and obtains the environmental information of the surrounding area. The obtained environmental information of the surrounding area is sent to the main device. After receiving the environmental information from other devices, the main device may modify the current initial visual-field image. The initial visual-field image may represent content of the user's main visual-field. The display adjustment is performed on the initial visual-field image based on the environmental information, to obtain the visual-field enhanced image after the display adjustment. The main device in the embodiments of the present disclosure may send the displacement information of the main device and inform the target device the location and movement situation of the main device. The target device may send the environmental information including environmental information that the main device cannot perceive based on the displacement information to the main device. Therefore, after performing the display adjustment on the initial visual-field image based on the environmental information, the main device may obtain the visual-field enhanced image after visual field enhancement. In this way, an organic and coherent integration of the user's main visual-field and the enhanced visual-field is achieved, thereby improving the user's perception range, helping the user to avoid collisions, and improving user experience.

It should be noted that the target device in the embodiments of the present disclosure may be a cloud control center, a roadside device, or other main device. Taking the main device as a motorcycle and the other main device include a truck as an example, when the motorcycle is driving on the road and executing the vision enhancement method, the motorcycle sends displacement information of the motorcycle to the truck. When there is a roadside device on the road, the motorcycle may send the displacement information to the roadside device. The truck or the roadside device obtains environmental information of a surrounding area of the motorcycle based on the displacement information. As shown in FIG. 2, when there is a pedestrian in the environment, the pedestrian behind the truck cannot be seen from a perspective of the motorcycle. The truck or the roadside device sends environmental information containing pedestrian information to the motorcycle. The motorcycle may break through limitations of a visual field of the motorcycle and obtain greater perception capabilities based on the environmental information sent from the truck or the roadside device. In this way, the motorcycle may perform display adjustment on the initial visual-field image based on situation of the pedestrian in the environmental information, thereby obtaining an expanded visual-field image. It can be understood that a display filter of the motorcycle or a helmet with a display function of the motorcycle may obtain the current initial visual-field image, and display the expanded visual-field image.

It can be understood that when the target device is a roadside device or other main device, there may be multiple target devices in the environment. Any target device that is capable of establishing a direct or indirect connection (such as an indirect connection through the cloud control center) with the main device may send the obtained environmental information to the main device.

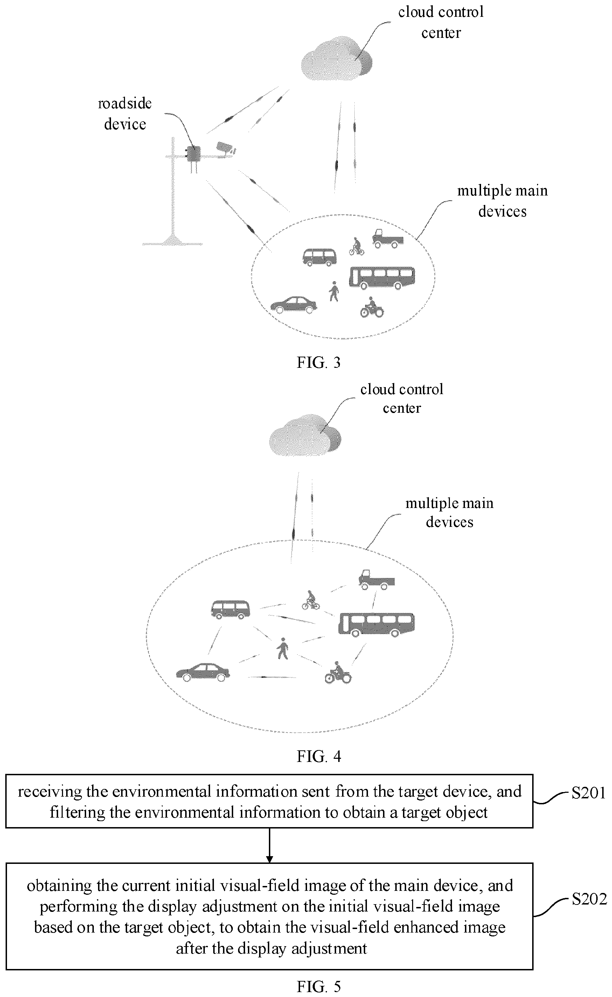

It should be noted that when the target device is a cloud control center, information exchange may be performed via the cloud control center. For example, as shown in FIG. 3, when there are multiple main devices in the environment, the main device may send the displacement information of the main device to other main devices or roadside devices, or the main device directly sends the displacement information of the main device to the cloud control center. The cloud control center sends the displacement information to other main devices or roadside devices. The other main devices or roadside devices may process the displacement information to obtain the environmental information. The other main devices or roadside devices may directly send the environmental information to the main device in a case where data transmission between the other main devices or roadside devices and the main device is established. Otherwise, the other main devices or roadside devices may send the environmental information to the cloud control center, and the cloud control center may send the environmental information to the main device.

In addition, when the target device is a cloud control center, information exchange may be performed via the cloud control center. For example, as shown in FIG. 4, when there are multiple main devices in the environment, the main device may directly send the displacement information of the main device to the cloud control center, and the cloud control center sends the displacement information to other main devices or roadside devices. The other main devices or roadside devices may process the displacement information to obtain the environmental information. The other main devices or roadside devices may directly send the environmental information to the cloud control center. The cloud control center may send the environmental information to the main device.

It can be understood that the main device in the embodiments of the present disclosure may achieve vehicle-to-road collaboration with the roadside devices. Alternatively, the main device may perform vehicle-to-vehicle collaboration with other main devices. When the main device is a terminal device such as an AR helmet, AR glasses, VR glasses, mobile phone, helmet with a display filter, etc., the visual field enhancement method may be applied to any movement scene of the main device, and there are not limited here.

It can be understood that in the embodiments of the present disclosure, information interaction may be achieved by performing communication based on wireless communication technology of 5G or the next generation. With the high-bandwidth and low-latency characteristics of wireless communication technology of 5G and the next generation, as well as improvement of current near-eye display technology, a perception ability of human visual perception system for the outside world may be partially or completely replaced from a natural state to the visual-field enhanced image in an artificially enhanced state, thereby obtaining a perception ability stronger than the perception ability in the natural state. In this way, improving safety and efficiency may be achieved by utilizing the enhancement.

In some embodiments, the displacement information includes first coordinate information of the main device, for enabling the target device to obtain the surrounding area of the main device based on the first coordinate information, and to obtain the environmental information based on the surrounding area. Alternatively, the displacement information includes the first coordinate information of the main device and first movement data of the main device, for enabling the target device to obtain the surrounding area of the main device based on the first coordinate information and the first movement data, and to obtain the environmental information based on the surrounding area.

It should be noted that the displacement information in the embodiments of the present disclosure may represent a location and movement situation of the main device. In some embodiments, the displacement information may include the first coordinate information of the main device. The first coordinate information represents a coordinate of the main device. The location of the main device may be known through the first coordinate information. The target device may obtain a coordinate location of the main device based on the first coordinate information, thereby accurately obtaining the surrounding area where the main device is based on the location of the main device. A range to obtain the environmental information is limited, thereby preventing the target device from obtaining a large amount of redundant environmental information without limit. The obtained environmental information is in the surrounding area of the main device and may cause a collision safety risk to the main device. In some embodiments, the target device may obtain the coordinate location of the main device based on the first coordinate information, obtain the movement situation of the main device based on changes in the first coordinate information, and define the surrounding area by combining the first coordinate information and the movement status of the main device. For example, based on the above embodiments, a region that may cause a collision safety risk to the main device may be defined based on the movement situation, thereby improving the effectiveness of the obtained environmental information, improving the efficiency of information acquisition, and avoiding computational and storage stress on the main device or the target device caused by obtaining unnecessary data.

In some embodiments, the displacement information may include the first coordinate information of the main device and the first movement data of the main device. The first coordinate information represents the coordinate of the main device. The location of the main device may be known through the first coordinate information. The first movement data represents the movement situation of the main device. In some embodiments, the first movement data includes a moving direction and a moving speed of the main device. The target device may obtain the coordinate location of the main device based on the first coordinate information, obtain the movement situation of the main device based on the first movement data, and define the surrounding area by combining the first coordinate information and the first movement data. For example, the region that may cause a collision safety risk to the main device may be defined based on the first movement data. For example, a moving radius may be determined based on the moving speed of the main device, and the region that may cause the collision safety risk to the main device is filtered within the moving radius, thereby improving the effectiveness of the obtained environmental information, improving the efficiency of information acquisition, and avoiding computational and storage stress on the main device or the target device caused by obtaining unnecessary data.

It can be understood that in the embodiments of the present disclosure, the surrounding area may be defined based on the movement situation of the main device. For example, taking the displacement information including the first coordinate information and the first movement data as an example, the surrounding area may be defined based on the moving direction of the main device in the first movement data. When the moving direction is forward or directly north, the surrounding area may be determined to be a region in front or a region in directly north of the main device. In this way, a region behind or a region directly south of the main device is no longer considered, and it is believed that other objects in a front area or a directly north region may cause collision safety risks to the main device, thereby further improving the effectiveness of the obtained environmental information, improving the efficiency of information acquisition, and avoiding computational and storage stress on the main device or the target device caused by obtaining unnecessary data.

As shown in FIG. 5, in some embodiments, the above operation at block S103 may also include but is not limited to operations at block S201 to block S202.

At block S201, the environmental information sent from the target device is received, and the environmental information is filtered to obtain the target object.

At block S202, the current initial visual-field image of the main device is obtained, and display adjustment is performed on the initial visual-field image based on the target object, to obtain the visual-field enhanced image after the display adjustment.

In some embodiments, the main device may filter the environmental information to filter out the target object that meets conditions, and adjust the display based on the target object to reduce the burden on the human eyes and brain. In some embodiments, the main device receives the environmental information from the target device and filters the environmental information, as well as obtains the target object form the environmental information by filtering. It can be understood that the environmental information may include information about many different objects. For example, the environmental information may include personal information, vehicle information, fixed obstacle information, etc. in the surrounding area. Faulty obstacle information may include information of obstacles such as street lights, trash cans fixed on the roadside, etc. For the main device, not every piece of environmental information will have an impact on the moving safety of the main device. Therefore, only the environmental information that may affect the moving safety of the main device is filtered out as the target object. For example, the target object may be an oncoming vehicle, an oncoming pedestrian, or a street light located on a turning route of the main device, etc. The main device obtains the current initial visual-field image, and performs display adjustment on the initial visual-field image based on the target object, to obtain the visual-field enhanced image after the display adjustment. The visual-field enhanced image after the display adjustment may prompt the target object.

It should be noted that the main device may filter out the target object from the environmental information based on a preset filtering condition, and determine whether various factors in the environmental information may affect the moving safety of the main device based on the filtering condition. The filtering condition may be set by combining various factors, for example, by combining locations and movement situations of various factors in the environmental information, or by combining whether various factors in the environmental information will appear on a moving route of the main device, etc. Based on these considerations, the filtering condition is set to determine the target object.

It should be noted that the display adjustment being performed on the initial visual-field image based on the target object, to obtain the visual-field enhanced image after the display adjustment may be adjusting display content of the initial visual-field image based on the target object, or controlling the initial visual-field image to enter a reminder mode to obtain the visual-field enhanced image. In addition, the main device may emit sounds, vibration prompts, etc., which are not limited here.

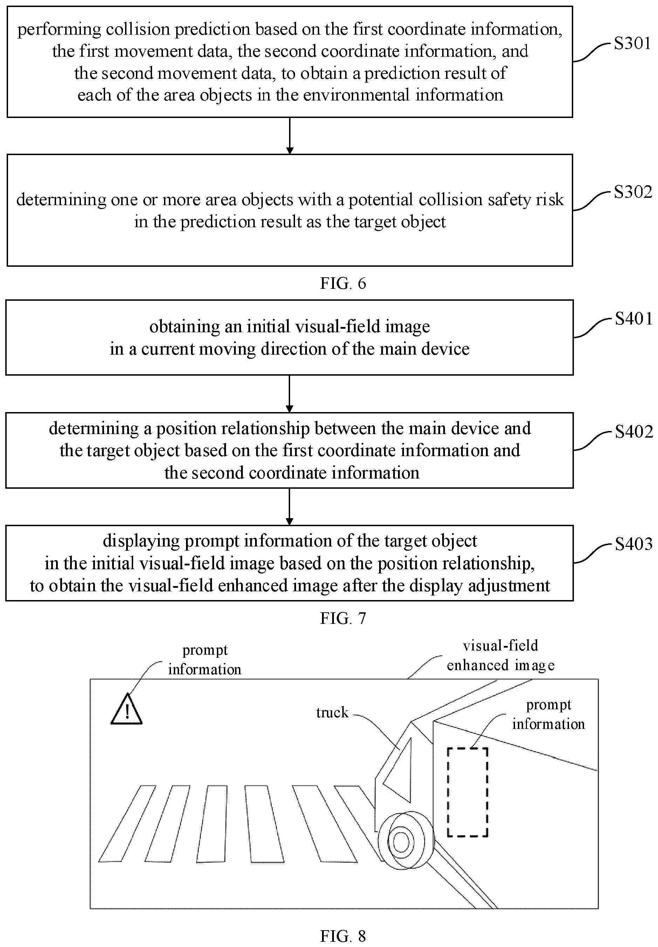

In some embodiments, the displacement information includes the first coordinate information of the main device and the first movement data of the main device. The environmental information is obtained by the target device based on second coordinate information and second movement data of area objects. The area objects are obtained from the surrounding area by the target device. As shown in FIG. 6, the above operation at block S201 may also include but is not limited to operations at block S301 to block S302.

At block S301, collision prediction is performed based on the first coordinate information, the first movement data, the second coordinate information, and the second movement data, to obtain a prediction result of each of the area objects in the environmental information.

At block S302, one or more area objects with a potential collision safety risk in the prediction result is determined as the target object.

In some embodiments of the present disclosure, the first coordinate information and the first movement data of the main device and the second coordinate information and the second movement data of the area objects are processed to filter out the target object. In some embodiments, the main device performs the collision prediction based on the first coordinate information, the first movement data, the second coordinate information, and the second movement data, to obtain the prediction result of each of the area objects in the environmental information, and determines one or more area objects with the potential collision safety risk in the prediction result as the target object. It can be understood that when the main device is any device such as a vehicle, motorcycle, etc., the embodiments of the present disclosure may also perform driving analysis when performing collision prediction, to obtain a required prediction result.

It should be noted that the area objects may be vehicles in the surrounding area, oncoming pedestrians, or street lights located on the turning route of the main device, etc. The environmental information is obtained by the target device based on the second coordinate information and the second movement data of the area objects. The collision prediction is performed based on the first coordinate information, the first movement data, the second coordinate information, and the second movement data, and a possibility of whether each of the area objects will collide with the main device may be obtained. In some embodiments, both the first movement data and the second movement data include the moving speed and the moving direction. In the embodiments of the present disclosure, besides based on coordinate locations of the main device and the area objects, the possibility of collision between the main device and each of the area objects may further be determined based on the moving speed and moving direction between the main device and each of the area objects, to obtain the prediction result of each of the area objects in the environmental information. In the prediction result, an area object that may cause collision or affect the safe driving of the main device is determined as the target object, indicating that the target object may affect the moving safety of the main device.

As shown in FIG. 7, in some embodiments, the above operation at block S202 may also include but is not limited to operations at block S401 to block S403.

At block S401, an initial visual-field image in a current moving direction of the main device is obtained.

At block S402, a position relationship between the main device and the target object is determined based on the first coordinate information and the second coordinate information.

At block S403, prompt information of the target object is displayed in the initial visual-field image based on the position relationship, to obtain the visual-field enhanced image after the display adjustment.

In some embodiments, the embodiments of the present disclosure perform display adjustment on the initial visual-field image based on the target object. In some embodiments, the main device obtains the initial visual-field image in the current moving direction. When the moving direction is forward, the obtained initial visual-field image is a visual-field image in a forward direction. It can be understood that the main device may arranged with a camera to obtain a required initial visual-field image. The embodiments of the present disclosure determine the position relationship between the main device and the target object based on the first coordinate information and the second coordinate information, thereby determining a location of the target object in the initial visual-field image. The prompt information of the target object is displayed in the initial visual-field image based on the position relationship, to obtain the visual-field enhanced image after the display adjustment.

In some embodiments, the prompt information in the embodiments of the present disclosure may be of various types. In the embodiments of the present disclosure, the position relationship between the main device and the target object may be determined based on the first coordinate information and the second coordinate information, so that the prompt information of the target object is displayed in a corresponding location in the initial visual-field image. As shown in FIG. 8, the main device displays a prompt box at the corresponding location in the initial visual-field image to facilitate the user to know that there is a danger source here and improve the user's perception ability. Alternatively, embodiments of the present disclosure may make other prompt information based on the target location. After obtaining that there is a target object in the surrounding area that affect the moving safety of the main device, a warning symbol is displayed in the initial visual-field image as the prompt information. As shown in FIG. 8, in the embodiments of the present disclosure, a warning symbol may be displayed in an upper left corner area of the initial visual-field image to remind the user that there is a danger source in the surrounding area. In addition, embodiments of the present disclosure may make a voice prompt based on the target object. For example, a voice may be made to prompt a distance in meters and a direction where the target object is located. Alternatively, a voice may be made to prompt the second coordinate information and the second movement data of the target object, etc. Moreover, embodiments of the present disclosure may also make the prompt box and the warning symbol in the above embodiments to blink, thereby reminding the user that there is danger source in the surrounding area, which are not limited here.

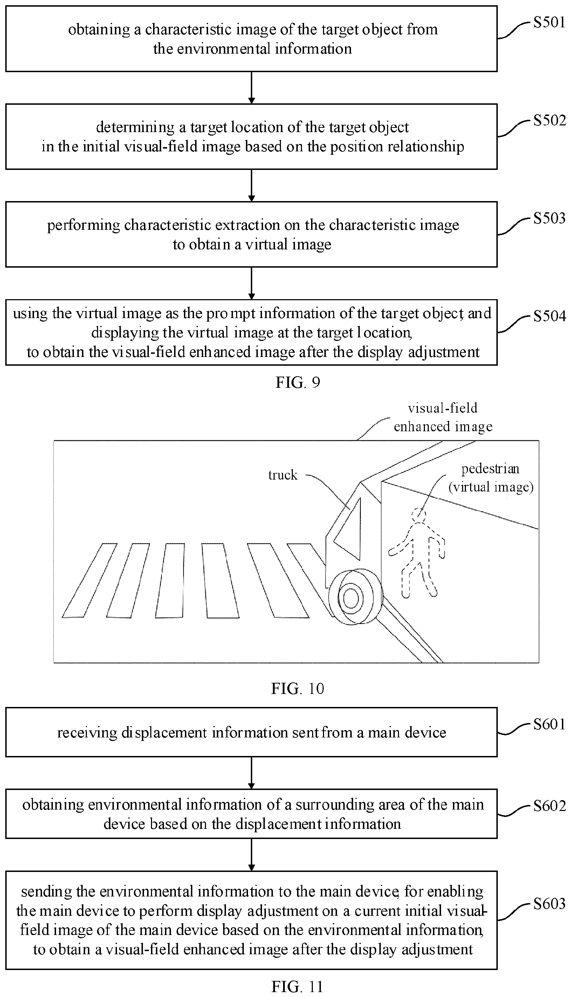

As shown in FIG. 9, in some embodiments, the above operation at block S403 may also include but is not limited to operations at block S501 to block S504.

At block S501, a characteristic image of the target object is obtained from the environmental information.

At block S502, a target location of the target object is determined in the initial visual-field image based on the position relationship.

At block S503, characteristic extraction is performed on the characteristic image to obtain a virtual image.

At block S504, the virtual image is used as the prompt information of the target object, and the virtual image is displayed at the target location to obtain the visual-field enhanced image after the display adjustment.

In some embodiments, the prompt information in the embodiments of the present disclosure may be a processed virtual image. In some embodiments, the environmental information may include the characteristic image of the target object. In the above embodiments, embodiments of the present disclosure determine the position relationship between the main device and the target object based on the first coordinate information and the second coordinate information. The target location of the target object may be determined in the initial visual-field image based on the position relationship. The characteristic extraction is performed on the characteristic image to obtain the virtual image of the characteristic image. It can be understood that the characteristic image is an image corresponding to the target object, and the characteristic image obtained after characteristic extraction is also an image corresponding to the target object, which may indicate characteristics of the target object. The virtual image is used as the prompt information of the target object, and the virtual image is displayed at the target location to obtain the visual-field enhanced image after the display adjustment. In this way, the user may view the prompt information with more obvious feature in the visual-field enhanced image, thereby expanding the user's perception range.

It should be noted that after determining the surrounding area of the main device, the target device obtains the area objects in the surrounding area. When the target device is a roadside device, the roadside device may scan the surrounding area and obtain the second coordinate information and the second movement data of the area objects in the surrounding area. The roadside device may be arranged with a camera, and obtain the characteristic image of each of the area objects in the surrounding area through the camera. In some embodiments, the roadside device may also model the surrounding area through the camera, so as to obtain the second coordinate information and second movement data of the area objects during modeling, and are not limited here. In some embodiments, when the target device is another main device, such as another truck on the road, the another main device may be arranged with a camera to obtain the characteristic image of each of the area objects in the surrounding area. In some embodiments, the target device is a roadside device, another main device, or a cloud control center. After identifying the area object, the target device may obtain characteristic information of the area object, and compare the characteristic information with characteristic images stored in a database to determine the characteristic image of the area object, thereby sending the characteristic image to the main device.

It can be understood that the environmental information may also contain the characteristic information of the area object. The target device may obtain the characteristic information of the area object and send the characteristic information to the main device as part of the environmental information. The main device may obtain a corresponding characteristic image from a stored characteristic image database based on the characteristic information.

In a process of determining the target object from the area objects, the embodiments of the present disclosure may determine the characteristic image corresponding to the area object as the characteristic image of the target object, thereby obtaining the characteristic image of the target object from the environmental information.

It should be noted that in a process of performing characteristic extraction on the characteristic image in the embodiments of the present disclosure, there may be a variety of characteristic extraction methods. The obtained virtual image may be displayed at a corresponding target location. By displaying the characteristic image as the virtual image, the characteristic image may be distinguished from content of the initial visual-field image viewed actually by the user. The characteristic image being displayed as virtual content may indicate that the virtual content is the danger source, and is helpful for displaying a location that is not visible within a visual field of the main device. For example, the characteristic extraction may be to extract a contour of the characteristic image, and use the extracted contour as the virtual image. As shown in FIG. 10, when the target object is a pedestrian, the main device may extract a contour of the pedestrian and use the obtained contour as the prompt information. A corresponding contour is displayed at the target location in the initial visual-field image, so that the user may understand that the danger source is the pedestrian after viewing the visual-field enhanced image, thereby improving the perception ability, helping the user to avoid collisions, and improving user experience. In some embodiments, the characteristic extraction may be to extract a translucent characteristic image of the characteristic image, and the obtained translucent characteristic image may be used as the virtual image. When the target object is a pedestrian, the main device may extract a translucent image of the pedestrian, and use the obtained translucent image as the prompt information. A corresponding translucent image is displayed at the target location in the initial visual-field image, so that the user may understand that the danger source is the pedestrian after viewing the visual-field enhanced image, thereby improving the perception ability, helping the user to avoid collisions, and improving user experience. In addition, the characteristic extraction and the obtained characteristic image may be in other forms and is not limited here.

The embodiments of the present disclosure also provide a visual field enhancement method, which is applied to a target device. As shown in FIG. 11, the visual field enhancement method in the embodiments of the present disclosure includes but is not limited to operations at block S601 to block S603.

At block S601, displacement information sent from a main device is received.

At block S602, environmental information of a surrounding area of the main device is obtained based on the displacement information.

At block S603, the environmental information is sent to the main device, for enabling the main device to perform display adjustment on a current initial visual-field image of the main device based on the environmental information, to obtain a visual-field enhanced image after the display adjustment.

In some embodiments, the embodiments of the present disclosure also provide the visual field enhancement method, which is applied to the target device. During a process of executing the visual field enhancement method, the target device receives the displacement information sent from the main device. The displacement information of the main device may represent a location and movement situation of the main device. After receiving the displacement information, the target device processes the displacement information to determine the surrounding area where the main device is located, and obtains the environmental information of the surrounding area. The environmental information of the surrounding area is sent to the main device, so that the main device may modify the current initial visual-field image after receiving the environmental information from other devices. The initial visual-field image may represent content of the user's main visual-field. The display adjustment is performed on the initial visual-field image based on the environmental information, to obtain the visual-field enhanced image after adjustment. The main device in the embodiments of the present disclosure may send the displacement information of the main device and inform the target device of a location and a movement situation of the main device. The target device may send the environmental information including environmental information that the main device cannot perceive based on the displacement information to the main device. Therefore, after performing the display adjustment on the initial visual-field image based on the environmental information, the main device may obtain the visual-field enhanced image after visual field enhancement. In this way, an organic and coherent integration of the user's main visual-field and the enhanced visual-field is achieved, thereby improving the user's perception range, helping the user to avoid collisions, and improving user experience.

It should be noted that the target device in the embodiments of the present disclosure may be a cloud control center, a roadside device, or other main device. The implementation in specific scenarios may refer to the description in the above embodiments, and will not be described again here.

It can be understood that in the embodiments of the present disclosure, information interaction may be achieved by performing communication based on wireless communication technology of 5G or the next generation. With the high-bandwidth and low-latency characteristics of wireless communication technology of 5G and the next generation, as well as improvement of current near-eye display technology, a perception ability of human visual perception system for the outside world may be partially or completely replaced from a natural state to the visual-field enhanced image in an artificially enhanced state, thereby obtaining a perception ability stronger than the perception ability in the natural state. In this way, improving safety and efficiency may be achieved by utilizing the enhancement.

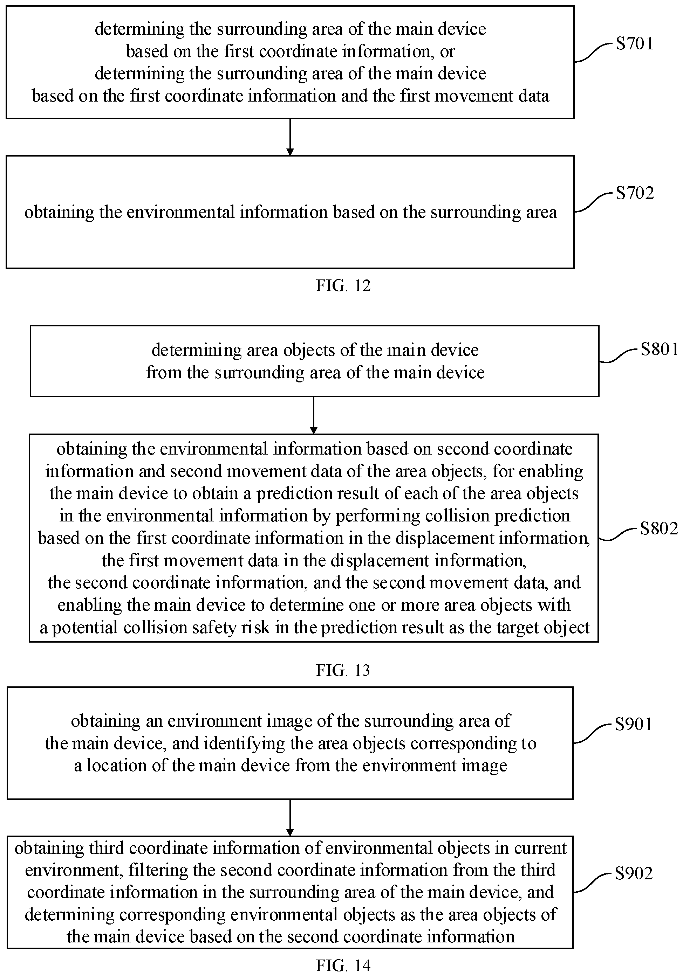

In some embodiments, the displacement information includes first coordinate information of the main device, or the displacement information includes first coordinate information of the main device and first movement data of the main device. As shown in FIG. 12, the above operation at block S602 may include but not limited to operations at block S701 to block S702.

At block S701, the surrounding area of the main device is determined based on the first coordinate information, or the surrounding area of the main device is determined based on the first coordinate information and the first movement data.

At block S702, the environmental information is obtained based on the surrounding area.

In some embodiments, the displacement information includes first coordinate information of the main device, and the target device obtains the surrounding area of the main device based on the first coordinate information, and obtains the environmental information based on the surrounding area. Alternatively, the displacement information includes the first coordinate information of the main device and first movement data of the main device, and the target device obtains the surrounding area of the main device based on the first coordinate information and the first movement data, and obtains the environmental information based on the surrounding area.

It should be noted that the displacement information in the embodiments of the present disclosure may represent a location and movement situation of the main device. In some embodiments, the displacement information may include the first coordinate information of the main device. The first coordinate information represents a coordinate of the main device. The location of the main device may be known through the first coordinate information. The target device may obtain a coordinate location of the main device based on the first coordinate information, thereby accurately obtaining the surrounding area where the main device is based on the location of the main device. A range to obtain the environmental information is limited, thereby preventing the target device from obtaining a large amount of redundant environmental information without limit. The obtained environmental information is in the surrounding area of the main device and may cause a collision safety risk to the main device. In some embodiments, the target device may obtain the coordinate location of the main device based on the first coordinate information, obtain the movement situation of the main device based on changes in the first coordinate information, and define the surrounding area by combining the first coordinate information and the movement status of the main device. For example, based on the above embodiments, a region that may cause a collision safety risk to the main device may be defined based on the movement situation, thereby improving the effectiveness of the obtained environmental information, improving the efficiency of information acquisition, and avoiding computational and storage stress on the main device or the target device caused by obtaining unnecessary data.

In some embodiments, the displacement information may include the first coordinate information of the main device and the first movement data of the main device. The first coordinate information represents the coordinate of the main device. The location of the main device may be known through the first coordinate information. The first movement data represents the movement situation of the main device. In some embodiments, the first movement data includes a moving direction and a moving speed of the main device. The target device may obtain the coordinate location of the main device based on the first coordinate information, obtain the movement situation of the main device based on the first movement data, and define the surrounding area by combining the first coordinate information and the first movement data. For example, the region that may cause a collision safety risk to the main device may be defined based on the first movement data. For example, a moving radius may be determined based on the moving speed of the main device, and the region that may the cause collision safety risk to the main device is filtered within the moving radius, thereby improving the effectiveness of the obtained environmental information, improving the efficiency of information acquisition, and avoiding computational and storage stress on the main device or the target device caused by obtaining unnecessary data.

It can be understood that in the embodiments of the present disclosure, the surrounding area may be defined based on the movement situation of the main device. For example, taking the displacement information including the first coordinate information and the first movement data as an example, the surrounding area may be defined based on the moving direction of the main device in the first movement data. When the moving direction is forward or directly north, the surrounding area may be determined to be a region in front or a region in directly north of the main device. In this way, a region behind or a region directly south of the main device is no longer considered, and it is believed that other objects in a front area or a directly north region may cause collision safety risks to the main device, thereby further improving the effectiveness of the obtained environmental information, improving the efficiency of information acquisition, and avoiding computational and storage stress on the main device or the target device caused by obtaining unnecessary data.

In some embodiments, the visual-field enhanced image is obtained by the main device after performing the display adjustment on the initial visual-field image based on the target object. The target object is obtained by the main device receiving the environmental information sent from the target device and filtering the environmental information.

In some embodiments, the main device may filter the environmental information to filter out the target object that meets conditions, and adjust the display based on the target object to reduce the burden on the human eyes and brain. In some embodiments, the main device receives the environmental information from the target device and filters the environmental information, as well as obtains the target object form the environmental information by filtering. It can be understood that the environmental information may include information about many different objects. For example, the environmental information may include personal information, vehicle information, fixed obstacle information, etc. in the surrounding area. Faulty obstacle information may include information of obstacles such as street lights, trash cans fixed on the roadside, etc. For the main device, not every piece of environmental information will have an impact on the moving safety of the main device. Therefore, only the environmental information that may affect the moving safety of the main device is filtered out as the target object. For example, the target object may be an oncoming vehicle, an oncoming pedestrian, or a street light located on a turning route of the main device, etc. The main device obtains the current initial visual-field image, and performs display adjustment on the initial visual-field image based on the target object, to obtain the visual-field enhanced image after the display adjustment. The visual-field enhanced image after the display adjustment may prompt the target object.

It should be noted that the main device may filter out the target object from the environmental information based on a preset filtering condition, and determine whether various factors in the environmental information may affect the moving safety of the main device based on the filtering condition. The filtering condition may be set by combining various factors, for example, by combining locations and movement situations of various factors in the environmental information, or by combining whether various factors in the environmental information will appear on a moving route of the main device, etc. Based on these considerations, the filtering condition is set to determine the target object.

It should be noted that the main device performing the display adjustment on the initial visual-field image based on the target object, to obtain the visual-field enhanced image after the display adjustment may be adjusting display content of the initial visual-field image based on the target object, or controlling the initial visual-field image to enter a reminder mode, to obtain the visual-field enhanced image. In addition, the main device may emit sounds, vibration prompts, etc., which are not limited here.

As shown in FIG. 13, in some embodiments, the above operation at block S602 may also include but is not limited to operations at block S801 to block S802.

At block S801, area objects of the main device are determined from the surrounding area of the main device.

At block S802, the environmental information is obtained based on second coordinate information and second movement data of the area objects, for enabling the main device to obtain a prediction result of each of the area objects in the environmental information by performing collision prediction based on the first coordinate information in the displacement information, the first movement data in the displacement information, the second coordinate information, and the second movement data, and enabling the main device to determine one or more area objects with a potential collision safety risk in the prediction result as the target object.

In some embodiments of the present disclosure, the main device may process the first coordinate information and the first movement data of the main device and the second coordinate information and the second movement data of the area objects to filter out the target object. In some embodiments, the target device may determine the area objects of the main device from the surrounding area. Each of the area object may be a vehicle in the surrounding area, an oncoming pedestrian, or a street light located on a turning route of the main device. The environmental information is obtained based on the second coordinate information and the second movement data of the area objects. The main device performs the collision prediction based on the first coordinate information, the first movement data, the second coordinate information, and the second movement data, to obtain the prediction result of each of the area objects in the environmental information, and determines one or more area objects with the potential collision safety risk in the prediction result as the target object. It can be understood that when the main device is any device such as a vehicle, motorcycle, etc., the embodiments of the present disclosure may also perform driving analysis when performing collision prediction, to obtain a required prediction result.

It should be noted that the main device performs collision prediction based on the first coordinate information, the first movement data, the second coordinate information, and the second movement data, and may obtain a possibility of whether each of the area objects will collide with the main device. In some embodiments, both the first movement data and the second movement data include the moving speed and the moving direction. In the embodiments of the present disclosure, besides based on coordinate locations of the main device and the area objects, the possibility of collision between the main device and each of the area objects may further be determined based on the moving speed and moving direction between the main device and each of the area objects, to obtain the prediction result of each of the area objects in the environmental information. In the prediction result, an area object that may cause collision or affect the safe driving of the main device is determined as the target object, indicating that the target object may affect the moving safety of the main device.

As shown in FIG. 14, in some embodiments, the above operation at block S801 may include but is not limited to operations at block S901 to block S902.

At block S901, an environment image of the surrounding area of the main device is obtained, and the area objects corresponding to a location of the main device are identified from the environment image.

At block S902, alternatively, third coordinate information of environmental objects in current environment is obtained, the second coordinate information is filtered from the third coordinate information in the surrounding area of the main device, and corresponding environmental objects are determined as the area objects of the main device based on the second coordinate information.

In some embodiments, the target device may determine required area objects from the surrounding area. In some embodiments, the target device may be arranged with a camera and obtain the environment image of the surrounding area of the main device through the camera. The area objects corresponding to the location of the main device are identified from the environment image. For example, when the surrounding area of the main device is a forward area, the target device only obtains information in the forward area. The target device may be arranged with a camera to obtain the environment image of the surrounding area through the camera, and identify the area objects corresponding to the location of the main device. It can be understood that when the surrounding area is the forward area of the main device, the obtained area objects are located in front of the main device. When the surrounding area is a side area of the main device, the obtained area objects are located on a side of the main device, and there is not limited here.

In some embodiments, the target device may also obtain the area objects by filtering coordinates of each object in the environment. In some embodiments, the target device may obtain the third coordinate information of the environment object in the current environment, and filter the second coordinate information from the third coordinate information in the surrounding area of the main device. The second coordinate information is part of the third coordinate information and is located in the surrounding area. Corresponding environmental objects are determined as the area objects of the main device based on the second coordinate information. For example, when the target device is a cloud control center, after receiving the displacement information of the main device to determine the surrounding area, the cloud control center filters all coordinate information in the environment and only sends information located in the surrounding area to the main device, thereby improving the effectiveness of the obtained environmental information, improving the efficiency of information acquisition, and avoiding computational and storage stress on the main device or the target device caused by obtaining unnecessary data.

It can be understood that environmental objects are people, vehicles, fixed obstacles, etc. in the environment. The target device may obtain coordinate locations of the environmental objects in advance, or may arrange communication devices on the environmental objects so that the environmental objects may send coordinate locations of the environmental objects to the target device, which are not limited here.

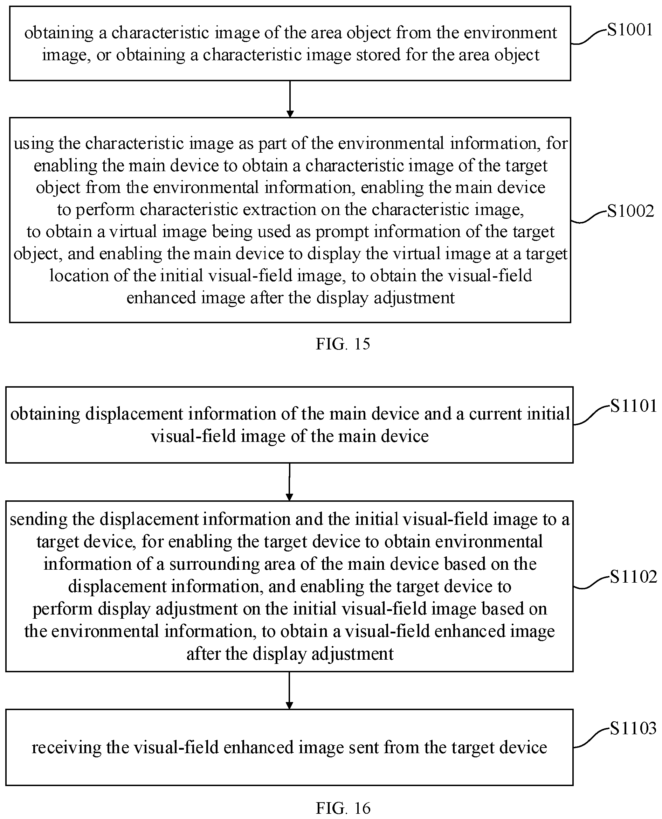

As shown in FIG. 15, the visual field enhancement method in the embodiments of the present disclosure may also include but is not limited to operations at block S1001 to block S1002.

At block S1001, a characteristic image of the area object is obtained from the environment image, or a characteristic image stored for the area object is obtained.

At block S1002, the characteristic image is used as part of the environmental information, for enabling the main device to obtain the characteristic image of the target object from the environmental information, enabling the main device to perform characteristic extraction on the characteristic image, to obtain a virtual image being used as the prompt information of the target object, and enabling the main device to display the virtual image at a target location of the initial visual-field image, to obtain the visual-field enhanced image after the display adjustment.

In some embodiments, the target device may be arranged with a camera, and obtain the characteristic image of the area object from the environment image through the camera. Alternatively, the target device may obtain the characteristic image corresponding to the area object from the stored characteristic image database based on obtained characteristics of the area object. The characteristic image may be sent to the main device as part of the environmental information. In some embodiments, the prompt information in the embodiments of the present disclosure may be a processed virtual image. In the above embodiments, the main device may determine the position relationship between the main device and the target object based on the first coordinate information and the second coordinate information. The target location of the target object may be determined in the initial visual-field image based on the position relationship. The characteristic extraction is performed on the characteristic image to obtain the virtual image of the characteristic image. It can be understood that the characteristic image is an image corresponding to the target object, and the characteristic image obtained after characteristic extraction is also an image corresponding to the target object, which may indicate characteristics of the target object. The virtual image is used as the prompt information of the target object, and the virtual image is displayed at the target location, to obtain the visual-field enhanced image after the display adjustment. In this way, the user may view the prompt information with more obvious feature in the visual-field enhanced image, thereby expanding the user's perception range.

It should be noted that after determining the surrounding area of the main device, the target device obtains the area objects in the surrounding area. When the target device is a roadside device, the roadside device may scan the surrounding area and obtain the second coordinate information and the second movement data of the area objects in the surrounding area. The roadside device may be arranged with a camera, and obtain the characteristic image of each of the area objects in the surrounding area through the camera. In some embodiments, the roadside device may also model the surrounding area through the camera, so as to obtain the second coordinate information and second movement data of the area objects during modeling, and are not limited here. In some embodiments, when the target device is another main device, such as another truck on the road, the another main device may be arranged with a camera to obtain the characteristic image of each of the area objects in the surrounding area. In some embodiments, the target device is a roadside device, another main device, or a cloud control center. After identifying the area object, the target device may obtain characteristic information of the area object, and compare the characteristic information with characteristic images stored in a database to determine the characteristic image of the area object, thereby sending the characteristic image to the main device.

In a process of determining the target object from the area objects, the main device in the embodiments of the present disclosure may determine the characteristic image of the target object based on the characteristic image corresponding to the area object, thereby obtaining the characteristic image of the target object from the environmental information.

It should be noted that in the embodiments of the present disclosure, during a process that the main device performs characteristic extraction on the characteristic image, there may be a variety of characteristic extraction methods. Reference may be made to the description of the above embodiments, which will not be described again here.

The embodiments of the present disclosure also provide a visual field enhancement method, which is applied to a main device. As shown in FIG. 16, the visual field enhancement method in the embodiments of the present disclosure includes but is not limited to operations at block S1101 to block S1103.

At block S1101, displacement information of the main device and a current initial visual-field image of the main device are obtained.

At block S1102, the displacement information and the initial visual-field image are sent to a target device, for enabling the target device to obtain environmental information of a surrounding area of the main device based on the displacement information, and enabling the target device to perform display adjustment on the initial visual-field image based on the environmental information, to obtain a visual-field enhanced image after the display adjustment.

At block S1103, the visual-field enhanced image sent from the target device is received.

In some embodiments, the visual field enhancement method may be applied to the main device. The main device may be any terminal device such as a vehicle, motorcycle, augmented reality (AR) helmet, AR glasses, virtual reality (VR) glasses, mobile phone, helmet with a display filter, etc. Alternatively, the main device may be any vehicle-mounted device with a display filter, or may be any terminal interface, and there are not limited here. During a process of executing the visual field enhancement method, the displacement information of the main device and the current initial visual-field image of the main device are obtained. The displacement information of the main device may represent a location and movement situation of the main device. The main device sends the obtained displacement information and the initial visual-field image to the target device. After receiving the displacement information, the target device processes the displacement information to determine the surrounding area where the main device is located, and obtains the environmental information of the surrounding area. The target device may modify the current initial visual-field image based on the obtained environmental information of the surrounding area. The initial visual-field image may represent content of the user's main visual-field. The display adjustment is performed on the initial visual-field image based on the environmental information, to obtain the visual-field enhanced image after the display adjustment. The obtained visual-field enhanced image is sent to the main device. After receiving the visual-field enhanced image sent from the target device, the main device may directly display the visual-field enhanced image. The main device in the embodiments of the present disclosure may send the displacement information of the main device and inform the target device of the location and movement situation of the main device. The target device may perform the display adjustment on the initial visual-field image of the main device directly based on environmental information including environmental information that the main device cannot perceive, and obtain the visual-field enhanced image after visual field enhancement. In this way, an organic and coherent integration of the user's main visual-field and the enhanced visual-field is achieved, thereby improving the user's perception range, helping the user to avoid collisions, and improving user experience.

It should be noted that the target device in the embodiments of the present disclosure may be a cloud control center, a roadside device, or other main device. The implementation in specific scenarios may refer to the description in the above embodiments, which will not be described in detail here. It needs to be pointed out that in the visual field enhancement method in the embodiments of the present disclosure, the process of obtaining the visual-field enhanced image is completed at the target device. The main device only needs to send the displacement information of the main device and initial visual-field image to the target device, which are processed by the target device, and directly receives the visual-field enhanced image sent from the target device.

It can be understood that in the embodiments of the present disclosure, information interaction may be achieved by performing communication based on wireless communication technology of 5G or the next generation. With the high-bandwidth and low-latency characteristics of wireless communication technology of 5G and the next generation, as well as improvement of current near-eye display technology, a perception ability of human visual perception system for the outside world may be partially or completely replaced from a natural state to the visual-field enhanced image in an artificially enhanced state, thereby obtaining a perception ability stronger than the perception ability in the natural state. In this way, improving safety and efficiency may be achieved by utilizing the enhancement.

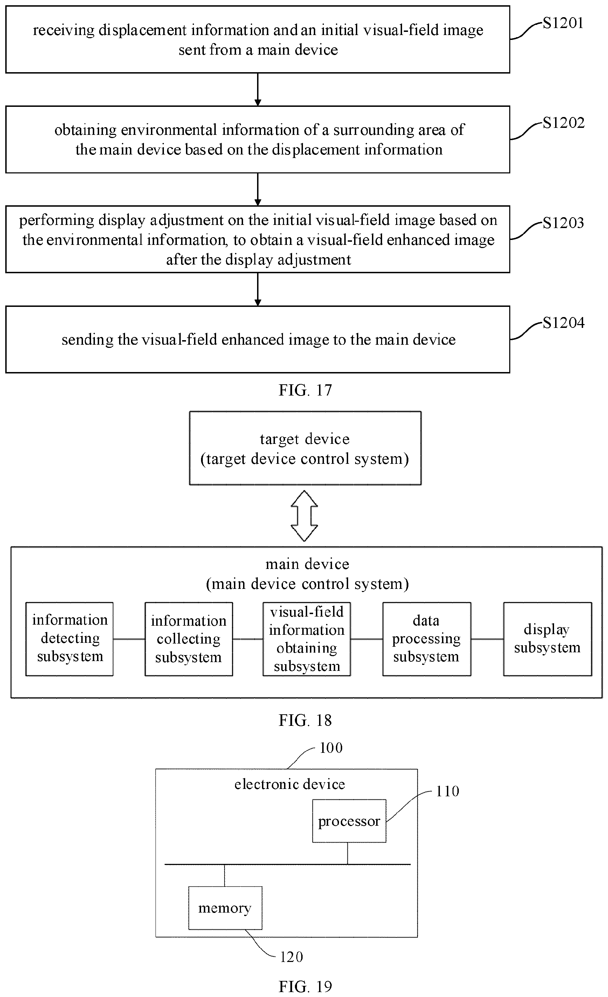

The embodiments of the present disclosure also provide a visual field enhancement method, which is applied to a target device. As shown in FIG. 17, the visual field enhancement method in the embodiments of the present disclosure includes but is not limited to operations at block S1201 to block S1204.

At block S1201, displacement information and an initial visual-field image sent from a main device are received.

At block S1202, environmental information of a surrounding area of the main device is obtained based on the displacement information.

At block S1203, display adjustment is performed on the initial visual-field image based on the environmental information, to obtain a visual-field enhanced image after the display adjustment.

At block S1204, the visual-field enhanced image is sent to the main device.

In some embodiments, the embodiments of the present disclosure also provide the visual field enhancement method, which is applied to the target device. During a process of executing the visual field enhancement method, the target device may receive the displacement information and the current initial visual-field image of the main device sent from the main device. The displacement information of the main device may represent a location and movement situation of the main device. After receiving the displacement information, the target device processes the displacement information to determine the surrounding area where the main device is located, and obtains the environmental information of the surrounding area. The target device may modify the current initial visual-field image based on the obtained environmental information of the surrounding area. The initial visual-field image may represent content of the user's main visual-field. The display adjustment is performed on the initial visual-field image based on the environmental information, to obtain the visual-field enhanced image after the display adjustment. The obtained visual-field enhanced image is sent to the main device. After receiving the visual-field enhanced image sent from the target device, the main device may directly display the visual-field enhanced image. The main device in the embodiments of the present disclosure may send the displacement information of the main device and inform the target device of the location and movement situation of the main device. The target device may perform the display adjustment on the initial visual-field image of the main device directly based on environmental information including environmental information that the main device cannot perceive, and obtain the visual-field enhanced image after visual field enhancement. In this way, an organic and coherent integration of the user's main visual-field and the enhanced visual-field is achieved, thereby improving the user's perception range, helping the user to avoid collisions, and improving user experience.

It should be noted that the target device in the embodiments of the present disclosure may be a cloud control center, a roadside device, or other main device. The implementation in specific scenarios may refer to the description in the above embodiments, which will not be described in detail here. It needs to be pointed out that in the visual field enhancement method in the embodiments of the present disclosure, the process of obtaining the visual-field enhanced image is completed at the target device. The main device only needs to send the displacement information of the main device and initial visual-field image to the target device, which are processed by the target device, and directly receives the visual-field enhanced image sent from the target device.

It can be understood that the visual field enhancement method in the embodiments of the present disclosure may perform processing blocks described in any of the above embodiments. What is different from the visual field enhancement method in other embodiments is that in the visual field enhancement method in the embodiments, a process of obtaining the visual-field enhanced image is completed in the target device, which will not be described again here.

It can be understood that in the embodiments of the present disclosure, information interaction may be achieved by performing communication based on wireless communication technology of 5G or the next generation. With the high-bandwidth and low-latency characteristics of wireless communication technology of 5G and the next generation, as well as improvement of current near-eye display technology, a perception ability of human visual perception system for the outside world may be partially or completely replaced from a natural state to the visual-field enhanced image in an artificially enhanced state, thereby obtaining a perception ability stronger than the perception ability in the natural state. In this way, improving safety and efficiency may be achieved by utilizing the enhancement.

It should be pointed out that the visual field enhancement method in any of the above embodiments may be applied to an AR holographic technology. That is, the main device may perform AR holographic display to display the visual-field enhanced image, thereby achieving a purpose to enhance perception ability and expand perception range of natural person. Through the organic and coherent integration of the user's main visual-field and the enhanced visual-field, the user may complete coherent observation and judgment of surrounding environment in a scene with an obstacle in the visual field, thereby avoiding safety accidents caused by safety risks blocked by the obstacle in the visual field to a certain extent. For example, a safety-risk moving unit blocked by the obstacle in the visual field is moving toward a target observer, and the obstacle interferes with a radar auxiliary device of the target observer. The visual-field enhanced image obtained in the embodiments of the present disclosure will play a role.

Since holographic images may cause visual overlap of a two-dimensional image in a three-dimensional world and increase a burden on the human eyes and human brain, within a range of physiological characteristic response duration of the human eyes and human brain, unnecessary holographic data should be excluded as much as possible. The most important information and content should be intelligently judged and projected holographically to reduce the burden on the human eyes and human brain.

Therefore, the embodiments of the present disclosure are based on physiological characteristics of human vision and human brain processing and feedback duration to expand the user's perception range. For example, assuming that a normal braking reaction time of the human brain is 0.75 second to 1 second. In a case where a speed of the main device is 30 km/h, and the user's reaction time is one second, a radius of a perception range in a visual-field enhanced image after vision-enhanced is at least 8.33 meters plus a braking distance of the main device. In a case where a speed of the main device is 70 km/h, the radius of the perception range in the visual-field enhanced image after vision-enhanced is at least 19.44 meters plus the braking distance of the main device.

By executing the visual field enhancement method in the embodiments of the present disclosure, the user's perception range may be improved. For example, assuming that a normal reaction time of the human brain is t, the braking distance of the moving unit of the main device is f (vehicle), when an instantaneous speed of the main device is V1, a corresponding sensing radius is r1=V1*t+f (vehicle); when the instantaneous speed of the main device is V2, the corresponding sensing radius is r2=V2*t+f (vehicle), and so on.

As shown in FIG. 18, a main device control system is provided. The main device control system may be applied to the main device. The main device control system is arranged with an information detecting subsystem, an information collecting subsystem, a visual-field obtaining subsystem, a data processing subsystem, and a display subsystem. The visual-field obtaining subsystem may be a holographic visual-field information obtaining subsystem.

The information detecting subsystem is responsible for detecting information such as working status of the information detecting subsystem, a center coordinate of a main visual-field, a moving direction, a moving speed, etc., to obtain displacement information and an initial visual-field image.

The information collecting subsystem is responsible for collecting third-party information data of a surrounding unit (e.g., a target device) perceived by the main device.

The visual-field obtaining subsystem is responsible for sending information data to/receiving information data from a third-party data center (e.g., the target device).

The data processing subsystem is responsible for calculating relevant data, analyzing and predicting current moving status of various area objects in real-time, and filtering information with security risks.

The display subsystem is responsible for displaying a visual-field enhanced image overlaid and projected AR enhanced visual by cooperating with a real scene coordinate of the main device.

A control subsystem is responsible for the unified control and management of other subsystems.

The main device control system may execute the visual field enhancement method in any of the above embodiments and communicate with the target device. The target device may be arranged with a target device control system to realize functions of the target device, which is not limited here.

FIG. 19 shows an electronic device 100 provided by the embodiments of the present disclosure. The electronic device 100 includes a processor 110, a memory 120, and a computer program stored on the memory 120 and executed by the processor 110. The computer program is configured to perform the above visual field enhancement methods when running.

The processor 110 and the memory 120 may be connected through a bus or other means.

As a non-transitory computer-readable storage medium, the memory 120 is configured to store a non-transitory software program or a non-transitory computer executable program, such as the visual field enhancement methods described in the embodiments of the present disclosure. The processor 110 implements the above visual field enhancement methods by running the non-transitory software program or an instruction stored in the memory 120.

The memory 120 may include a program storage area and a data storage area. The program storage area may store an operating system and an application program required for at least one function. The data storage area may store the above-mentioned visual field enhancement methods. Additionally, the memory 120 may include a high-speed random access memory 120 and may also include a non-transitory memory 120, such as at least one storage device, a flash memory device, or other non-transitory solid-state storage devices. In some embodiments, the memory 120 may include a memory 120 located remotely relative to the processor 110, and the remote memory 120 may be connected to the electronic device 100 through a network. Examples of the above-mentioned network include but are not limited to the Internet, an intranet, a local area network, a mobile communication network, and combinations thereof.

The non-transitory software program and instruction required to implement the above-mentioned visual field enhancement methods are stored in the memory 120. When executed by one or more processors 110, the above-mentioned visual field enhancement methods are executed. For example, operations at block S101 to block S103 of the method shown in FIG. 1, operations at block S201 to block S202 of the method shown in FIG. 5, operations at block S301 to block S302 of the method shown in FIG. 6, operations at block S401 to block S403 of the method shown in FIG. 7, operations at block S501 to block S504 of the method shown in FIG. 9, operations at block S601 to block S603 of the method shown in FIG. 11, operations at block S701 to block S702 of the method shown in FIG. 12, operations at block S801 to block S802 of the method shown in FIG. 13, operations at block S901 to block S902 of the method shown in FIG. 14, operations at block S1001 to block S1002 of the method shown in FIG. 15, operations at block S1101 to block S1103 of the method shown in FIG. 16, operations at block S1201 to block S1204 of the method shown in FIG. 17 are executed.

The embodiments of the present disclosure also provide a computer-readable storage medium configured to store a computer-executable instruction. The computer-executable instruction is configured to execute the above visual field enhancement methods.

In some embodiments, the computer-readable storage medium stores the computer-executable instruction, and the computer-executable instruction is executed by one or more control processors. For example, operations at block S101 to block S103 of the method shown in FIG. 1, operations at block S201 to block S202 of the method shown in FIG. 5, operations at block S301 to block S302 of the method shown in FIG. 6, operations at block S401 to block S403 of the method shown in FIG. 7, operations at block S501 to block S504 of the method shown in FIG. 9, operations at block S601 to block S603 of the method shown in FIG. 11, operations at block S701 to block S702 of the method shown in FIG. 12, operations at block S801 to block S802 of the method shown in FIG. 13, operations at block S901 to block S902 of the method shown in FIG. 14, operations at block S1001 to block S1002 of the method shown in FIG. 15, operations at block S1101 to block S1103 of the method shown in FIG. 16, operations at block S1201 to block S1204 of the method shown in FIG. 17 are executed.

The embodiments of the present disclosure at least include the following technical effects. The embodiments of the present disclosure provide the visual field enhancement method, the electronic device, and the storage medium, the visual field enhancement method may be applied to the main device and the target device. The main device sends the displacement information of the main device to the target device. The target device performs information acquisition by combining the displacement information, to obtain the environmental information of the surrounding area of the main device, and sends the environmental information to the main device. After combining the received environmental information of the surrounding area, the main device may perform display adjustment on the current initial visual-field image to enhance the visual field and generate the visual-field enhanced image after the display adjustment. In the embodiments of the present disclosure, since the main device receives the information from the target device and adjusts original visual-field image of the main device to avoid the problem of low perception ability caused by limited visual field of the main device, so the user's perception range is able to expand, thereby helping the user to avoid collisions and improving user experience.

Device embodiments described above are only illustrative, and units described as separate components may or may not be physically separate, that is, the units may be located in one place, or the units may be distributed to multiple network units. Some or all of the modules may be selected based on actual needs to achieve the purpose of the solutions of the embodiments.

Those of ordinary skill in the art can understand that all or some steps and systems in the methods disclosed above may be implemented as software, firmware, hardware, and appropriate combinations thereof. Some or all of the physical components may be implemented as software executed by a processor, such as a central processor, a digital signal processor, or a microprocessor, or be implemented as hardware, or be implemented as an integrated circuit, such as an application specific integrated circuit. Such software may be distributed on computer-readable media, and the computer-readable media may include computer storage media (or non-transitory media) and communication media (or transitory media). As well known to those of ordinary skill in the art, computer storage media includes volatile and nonvolatile media or removable and non-removable media implemented in any method or technology for storing information (i.e., computer readable instructions, data structures, program modules, or other data). The computer storage media includes but is not limited to random access memory (RAM), read-only memory (ROM), electrically erasable programmable read-only memory (EEPROM), flash memory or other memory technology, compact disc read-only memory (CD-ROM), digital versatile disk (DVD) or other optical disk storage, magnetic cassette, tape, storage device or other magnetic storage device, or any other media that may be configured to store desired information and be accessed by a computer. In addition, it is known to those of ordinary skill in the art that communication media typically includes computer readable instructions, data structures, program modules, or other data in a modulated data signal such as a carrier wave or other transport mechanism, and may include any information delivery media.

It should also be understood that the various implementations provided in the embodiments of the present disclosure may be combined arbitrarily to achieve different technical effects.

The above is a detailed description of several implementations of the present disclosure, but the present disclosure is not limited to the above-mentioned implementations. Those skilled in the art can also make various equivalent modifications or substitutions without violating the essence of the present disclosure. All the equivalent modifications or substitutions are included within the scope defined by the claims of the present disclosure.

## Claims

1. A visual field enhancement method, applied to a main device, and comprising:
obtaining displacement information of the main device;
sending the displacement information to a target device, for enabling the target device to obtain environmental information of a surrounding area of the main device based on the displacement information; and
receiving the environmental information sent from the target device, obtaining a current initial visual-field image of the main device, and performing display adjustment on the initial visual-field image based on the environmental information, to obtain a visual-field enhanced image after the display adjustment.

2. The visual field enhancement method according to claim 1, wherein the displacement information comprises first coordinate information of the main device, for enabling the target device to obtain the surrounding area of the main device based on the first coordinate information, and to obtain the environmental information based on the surrounding area; or
the displacement information comprises first coordinate information of the main device and first movement data of the main device, for enabling the target device to obtain the surrounding area of the main device based on the first coordinate information and the first movement data, and to obtain the environmental information based on the surrounding area.

3. The visual field enhancement method according to claim 1, wherein the receiving the environmental information sent from the target device, obtaining a current initial visual-field image of the main device, and performing display adjustment on the initial visual-field image based on the environmental information, to obtain a visual-field enhanced image after the display adjustment, comprises:
receiving the environmental information sent from the target device, and filtering the environmental information to obtain a target object; and
obtaining the current initial visual-field image of the main device, and performing the display adjustment on the initial visual-field image based on the target object, to obtain the visual-field enhanced image after the display adjustment.

4. The visual field enhancement method according to claim 3, wherein the displacement information comprises first coordinate information of the main device and first movement data of the main device, the environmental information is obtained by the target device based on second coordinate information and second movement data of area objects, and the area objects are obtained from the surrounding area by the target device;
the filtering the environmental information to obtain a target object, comprises:
performing collision prediction based on the first coordinate information, the first movement data, the second coordinate information, and the second movement data, to obtain a prediction result of each of the area objects in the environmental information; and
determining one or more area objects with a potential collision safety risk in the prediction result as the target object.

5. The visual field enhancement method according to claim 4, wherein the obtaining the current initial visual-field image of the main device, and performing the display adjustment on the initial visual-field image based on the target object, to obtain the visual-field enhanced image after the display adjustment, comprises:
obtaining an initial visual-field image in a current moving direction of the main device;
determining a position relationship between the main device and the target object based on the first coordinate information and the second coordinate information; and
displaying prompt information of the target object in the initial visual-field image based on the position relationship, to obtain the visual-field enhanced image after the display adjustment.

6. The visual field enhancement method according to claim 5, wherein the displaying prompt information of the target object in the initial visual-field image based on the position relationship, to obtain the visual-field enhanced image after the display adjustment, comprises:
obtaining a characteristic image of the target object from the environmental information;
determining a target location of the target object in the initial visual-field image based on the position relationship;
performing characteristic extraction on the characteristic image, to obtain a virtual image; and
using the virtual image as the prompt information of the target object, and displaying the virtual image at the target location, to obtain the visual-field enhanced image after the display adjustment.

7. A visual field enhancement method, applied to a target device, and comprising:
receiving displacement information sent from a main device;
obtaining environmental information of a surrounding area of the main device based on the displacement information; and
sending the environmental information to the main device, for enabling the main device to perform display adjustment on a current initial visual-field image of the main device based on the environmental information, to obtain a visual-field enhanced image after the display adjustment.

8. The visual field enhancement method according to claim 7, wherein the displacement information comprises first coordinate information of the main device, or the displacement information comprises first coordinate information of the main device and first movement data of the main device;
the obtaining environmental information of a surrounding area of the main device based on the displacement information, comprises:
determining the surrounding area of the main device based on the first coordinate information, or determining the surrounding area of the main device based on the first coordinate information and the first movement data; and
obtaining the environmental information based on the surrounding area.

9. The visual field enhancement method according to claim 7, wherein the visual-field enhanced image is obtained by the main device after performing the display adjustment on the initial visual-field image based on a target object, and the target object is obtained by the main device after receiving the environmental information sent from the target device and filtering the environmental information.

10. The visual field enhancement method according to claim 9, wherein the obtaining environmental information of a surrounding area of the main device based on the displacement information, comprises:
determining area objects of the main device from the surrounding area of the main device; and
obtaining the environmental information based on second coordinate information and second movement data of the area objects, for enabling the main device to obtain a prediction result of each of the area objects in the environmental information by performing collision prediction based on the first coordinate information in the displacement information, the first movement data in the displacement information, the second coordinate information, and the second movement data, and enabling the main device to determine one or more area objects with a potential collision safety risk in the prediction result as the target object.

11. The visual field enhancement method according to claim 10, wherein the determining area objects of the main device from the surrounding area of the main device, comprises:
obtaining an environment image of the surrounding area of the main device, and identifying the area objects corresponding to a location of the main device from the environment image; or
obtaining third coordinate information of environmental objects in current environment, filtering the second coordinate information from the third coordinate information in the surrounding area of the main device, and determining corresponding environmental objects as the area objects of the main device based on the second coordinate information.

12. The visual field enhancement method according to claim 11, further comprising:
obtaining a characteristic image of the area object from the environment image, or obtaining a characteristic image stored for the area object; and
using the characteristic image as part of the environmental information, for enabling the main device to obtain a characteristic image of the target object from the environmental information, enabling the main device to perform characteristic extraction on the characteristic image, to obtain a virtual image being used as prompt information of the target object, and enabling the main device to display the virtual image at a target location of the initial visual-field image, to obtain the visual-field enhanced image after the display adjustment.

13. A visual field enhancement method, applied to a main device, and comprising:
obtaining displacement information of the main device and a current initial visual-field image of the main device;
sending the displacement information and the initial visual-field image to a target device, for enabling the target device to obtain environmental information of a surrounding area of the main device based on the displacement information, and enabling the target device to perform display adjustment on the initial visual-field image based on the environmental information, to obtain a visual-field enhanced image after the display adjustment; and
receiving the visual-field enhanced image sent from the target device.

14. A visual field enhancement method, applied to a target device, and comprising:
receiving displacement information and an initial visual-field image sent from a main device;
obtaining environmental information of a surrounding area of the main device based on the displacement information;
performing display adjustment on the initial visual-field image based on the environmental information, to obtain a visual-field enhanced image after the display adjustment; and
sending the visual-field enhanced image to the main device.

15. An electronic device, comprising:
a memory, configured to store a computer program; and
a processor, configured to execute the computer program to implement the visual field enhancement method according to any one of claims 1 to 14.

16. A computer-readable storage medium, configured to store a program, wherein the program is executed by a processor to implement the visual field enhancement method according to any one of claims 1 to 14.
